# DEMANDE DE BREVET EUROPEEN

(11) **EP 3 340 208 A1**
(43) Date de publication de la demande: **27.06.2018**
(21) Numéro de dépôt: 17208682.9
(22) Date de dépôt: 19.12.2017
(51) Int. Cl.: G08G 5/00, G08G 5/02

(54) **GESTION DES MESSAGES AUX NAVIGANTS AERIENS**

(30) Priorité: 22.12.2016 FR 1601838
(71) Demandeur: Thales, 92400 Courbevoie (FR)
(72) Inventeur: BONNET, Antoine-adrien, 31036 TOULOUSE CEDEX (FR); LERAT, Christophe, 31036 TOULOUSE CEDEX (FR)
(74) Mandataire: Hnich-Gasri, Naïma

(57) **Abrégé**

Il est décrit un procédé mis en oeuvre par ordinateur de gestion d'un message aux navigants aériens comprenant les étapes consistant à:- recevoir au moins un message aux navigants aériens;- recevoir un ou plusieurs éléments d'une base de données de navigation associée à un plan de vol d'un aéronef; - comparer le contenu du message aux navigants aériens reçu avec les éléments de la base de données de navigation associée à un plan de vol d'un aéronef. Différents développements décrivent notamment la détection d'éléments indisponibles à partir de l'analyse du contenus des messages, des traitements effectués sur la partie des messages exprimée en langage naturel, diverses modalités de notifications à destination du pilote, l'intervention d'opérateurs tiers dans la gestion des messages, l'enrichissement de données et différentes variantes d'implémentations en matière de système (système de gestion de vol FMS et/ou sac de vol électronique EFB).

## Description

### Domaine de l'invention

L'invention concerne le domaine technique de l'avionique, et en particulier les procédés et les systèmes pour la préparation et la planification du vol d'un aéronef.

### Etat de la Technique

La planification et le déroulement d'un vol d'un aéronef nécessite de connaître des informations particulières en matière d'installations aéroportuaire, de météorologie et d'autres paramètres. Par exemple, la planification d'un vol nécessite de connaître les caractéristiques (relativement stables) des installations aéronautiques qui seront utilisées, comme la position et les dimensions des pistes, ou les fréquences des radiobalises, ainsi que la position des points et voies aériennes définies par les autorités de contrôle. Il est également indispensable de suivre des changements temporaires ou à plus court terme, par exemple dus à des opérations de maintenance, à la météorologie ou à tout autre événement ponctuel.

L'ensemble des informations nécessaires est rendue disponible par l'intermédiaire de bases de données, notamment des bases de données de navigation (NAVDB), et des messages aux navigants aériens (« NOTAM » acronyme de « *Notice to Airmen »).*

La gestion des messages NOTAM dans les systèmes existants comporte des limitations et des désavantages. En particulier, les bases de données de navigation (NAVDB) ne sont pas intégrées avec le flux des messages NOTAM. Les deux systèmes sont découplés, i.e. ne sont pas intégrés.

Le pilote a le devoir de prendre connaissance des messages NOTAM et d'en tenir compte lors de la planification du vol puis de son exécution, mais ceci repose uniquement sur sa mémoire entre ces étapes. Il doit gérer les messages NOTAM avec sa seule mémoire. Si les inconsistances résultant de l'absence d'intégration ne posent généralement pas problèmes dans le cas nominal (dans lequel tout se déroule peu ou prou comme prévu), une révision du plan de vol significative et/ou en urgence (par exemple lors d'un déroutement) peut conduire le pilote à oublier ou ignorer un message important. Les conséquences d'un tel oubli (involontaire) ou ignorance (active, sous pression) peuvent être catastrophiques (e.g. atterrissage sur une piste en travaux). Le fait de ne pas prendre en compte un message NOTAM peut avoir des conséquences graves, pouvant aller jusqu'à une infraction ou une mise en danger de l'aéronef. Il existe donc des enjeux de sûreté aéronautique.

Il existe un besoin pour des procédés et des systèmes avancés pour gérer les messages aux navigants.

### Résumé de l'invention

Il est décrit un procédé mis en oeuvre par ordinateur de gestion d'un message aux navigants aériens comprenant les étapes consistant à:- recevoir au moins un message aux navigants aériens;- recevoir un ou plusieurs éléments d'une base de données de navigation associée à un plan de vol d'un aéronef; - comparer le contenu du message aux navigants aériens reçu avec les éléments de la base de données de navigation associée à un plan de vol d'un aéronef. Différents développements décrivent notamment la détection d'éléments indisponibles à partir de l'analyse du contenus des messages, des traitements effectués sur la partie des messages exprimée en langage naturel, diverses modalités de notifications à destination du pilote, l'intervention d'opérateurs tiers dans la gestion des messages, l'enrichissement de données et différentes variantes d'implémentations en matière de système (système de gestion de vol FMS et/ou sac de vol électronique EFB).

Avantageusement selon l'invention, le pilote peut ne plus à avoir à compter sur sa seule mémoire spontanée (ou ses notes écrites) pour gérer les messages NOTAM. Ce type de message peut désormais être pris en compte, de manière plus automatisée, donc de façon plus sûre et plus systématique, améliorant la sûreté aérienne.

Avantageusement de surcroit, le contenu de messages pertinents peut être rappelé au pilote au moment opportun (information contextualisée).

Avantageusement, l'analyse et le traitement de la partie en langage formel ou codifié des messages, effectué de manière numérique, permet l'application de critères de tri (par exemple par type de menace, par gravité, selon le type d'avion, etc). Dans certains modes de réalisation, ce traitement d'information permet la génération de listes de messages NOTAM triés par ordre de pertinence ou d'importance (par exemple, piste fermée/très important; taxiway fermé/peu important ; présence d'une grue/très faible importance).

Avantageusement, la partie d'un message NOTAM exprimée sous forme de langage naturel peut être traitée et pris en compte pour le plan de vol ou la mission.

### Description des figures

D'autres caractéristiques et avantages de l'invention apparaîtront à l'aide de la description qui suit et des figures des dessins annexés dans lesquels:
La figure 1 illustre un exemple de message aux navigants aériens (NOTAM), tel que manipulé par l'invention.
La figure 2 illustre schématiquement la structure et les fonctions d'un système de gestion de vol de type FMS connu et d'un sac de vol électronique EFB.
La figure 3 illustre des exemples d'étapes du procédé selon l'invention.

### Description détaillée de l'invention

Le terme "aéronef" désigne un véhicule tel qu'un avion, ou un hélicoptère, ou un drone, etc.

Le terme "NOTAM", en anglais *"Notice To Airmen",* désigne un type de message destiné au personnel navigant.

Les notices NOTAM sont des messages textuels publiés par les autorités ou systèmes de contrôle de la navigation aérienne dans le but d'informer les pilotes.

Lors de la préparation d'un vol, mais aussi en cours de vol, le pilote doit consulter ces messages. Il revient au pilote de prendre connaissance de ceux qui concernent le tracé et la date de son vol et d'adapter sa planification si nécessaire.

Les NOTAM contiennent des informations très diverses concernant la navigation aérienne (danger ou interdiction ponctuelle, indisponibilité d'un équipement de radionavigation, d'une piste, évolutions des infrastructures aéroportuaires, modification d'une installation au sol, présence d'obstacles e.g. grue ou zones de travaux à proximité d'un aéroport. Plus généralement, un NOTAM peut informer au sujet d'un quelconque danger pour la navigation aérienne. Il peut aussi définir des zones interdites de survol.

De manière plus détaillée, les messages NOTAM peuvent traiter de différents sujets, notamment : l'organisation de l'espace aérien, les communications et installations radar, les installations et services, les dispositifs d'atterrissage aux instruments, les installations lumineuses, les aires de mouvements et d'atterrissage, les équipements de navigation en route et en zone terminale, les procédures pour trafic aérien, les alertes navigation (e.g. restrictions dans les espaces aériens), les services de contrôle en vol et de météorologie en vol, les alertes navigation, diverses information en matière de disponibilité, changements de conditions et conditions dangereuses, et de limitations.

Il est décrit un procédé mis en oeuvre par ordinateur de gestion d'un message aux navigants aériens comprenant les étapes consistant à: - recevoir au moins un message aux navigants aériens; - recevoir un ou plusieurs éléments d'une base de données de navigation associée à un plan de vol d'un aéronef; - comparer le contenu du message aux navigants aériens reçu avec les éléments de la base de données de navigation associée à un plan de vol d'un aéronef.

L'expression « message aux navigants aériens » désigne un message NOTAM ou « Notice to Airmen » en anglais. Le contenu d'un message peut être pertinent ou non pour le plan de vol considéré. Dans un mode de réalisation, une pluralité de messages sont collectés (au sol et/ou en vol, par exemple en flux i.e. de manière continue). Le contenu des messages, est obtenu par décodage du NOTAM (i.e. la structure et les champs du NOTAM sont connues) est analysé de diverses manières. Certains messages sont sélectionnés, i.e. pré-triés, par exemple en fonction de leur degré de pertinence par rapport au plan de vol, qui sert de critère de tri. La comparaison d'objets s'effectue entre le contenu d'un message (partie structurée/codifiée et partie exprimée en langage naturel) et la base de données de navigation dite NAVDB (en tout ou partie), laquelle est associée à un plan de vol. Le plan de vol peut être le plan de vol courant mais aussi un plan de vol alternatif, de toute nature (e.g. révisé, candidat, de secours, de déroutement etc).

Dans un mode de réalisation, le procédé comprend une étape consistant à déterminer à partir du contenu du message reçu qu'un élément de la base de données de navigation associée au plan de vol de l'aéronef est indisponible.

La présence (binaire: absence/présence) d'un élément de la NAVDB indiqué comme (temporairement) indisponible est déterminée. Le contenu des messages peut être analysé (analyse syntaxique/lexicale, etc) pour identifier ceux qui signalent un élément indisponible (e.g. installation aéronautique indisponible), et également pour produire une liste des installations concernées avec les dates de début et de fin d'indisponibilité.

Dans un mode de réalisation, le procédé comprend une étape consistant à comparer le contenu du message avec une base de données associée à un plan de vol de l'aéronef comprenant une étape consistant à déterminer la présence d'un ou de plusieurs mots-clefs parmi une pluralité de mots-clefs prédéfinis.

Des mots-clefs comme « travaux », « fermé » ou « indisponible » peuvent être détectés. La présence de mots-clefs peut être aussi être cumulative, ce qui peut permettre de déterminer l'occurrence d'un scénario parmi plusieurs (« passage », « véhicules », « derrière », « stationnement»). Dans un mode de réalisation, le procédé comprenant une étape consistant à noter un message NOTAM selon des critères préétablis (par exemple un score).

Dans un mode de réalisation, le procédé comprend une étape consistant à associer le contenu d'un message avec un plan de vol parmi une pluralité.

Le terme « associer » peut être remplacé par le terme « corréler » : cela signifie qu'un degré de pertinence est déterminé (par exemple quantifiée, ou selon une échelle finie), par exemple pour chaque plan de vol considéré (via les bases de données de navigation associées). Le contenu d'un message donné peut être non-pertinent pour un premier plan de vol mais se révéler être très important pour un second plan de vol (par exemple pour une révision du premier plan de vol).

Le procédé selon l'invention peut multiplier les comparaisons (N messages contre M plans de vols). Un même message peut être associé avec une pluralité de plans de vol.

Dans un mode de réalisation, le procédé comprend une étape consistant à réaliser une analyse sémantique du contenu du message exprimé en langage naturel.

Les éléments structurels connus dans les messages NOTAM permettent de trier/sélectionner préalablement les messages pertinents. Parmi ces messages sélectionnés, les parties des messages exprimées en langage naturel peuvent être avantageusement analysés, notamment par analyse sémantique. Une analyse sémantique peut combiner analyse lexicale (vocabulaire utilisé) et analyse syntaxique (grammaire) pour par exemple déterminer des correspondances/occurrences d'un scénario parmi plusieurs scénarios prédéfinis (un même scénario peut être exprimé par différentes phrases).

Dans un mode de réalisation, le procédé comprend une étape consistant à notifier le pilote si la présence d'un élément indisponible a été déterminée (boucle semi-ouverte).

L'étape de détection est généralement automatisée (i.e. boucle fermée e.g. effectuée par des comparaisons automatiques) mais elle peut être complétée par une analyse manuelle de la part du pilote ou d'un autre intervenant, par exemple un prestataire dont les analyses sont fournies à distance (boucle semi-ouverte). Par exemple, un message dont un score serait inférieur à un seuil prédéfini peut être soumis à l'attention du pilote, lequel peut infirmer ou confirmer la notation ou l'intérêt du message considéré.

De telles notifications ou avertissements peuvent avoir lieu lors de la planification initiale du vol, sur un EFB ou directement sur le FMS de l'aéronef, ou lors d'une modification faite en vol.

Dans un mode de réalisation, le procédé comprend une étape consistant à recevoir confirmation de l'élément déterminé comme indisponible. Le pilote peut fermer la boucle de rétroaction dans certains cas.

L'utilisation d'un élément indisponible est généralement signalée mais son utilisation de fait n'est généralement pas interdite. Le pilote pouvant décider de passer outre, un nouvel avertissement pourra par exemple être émis en vol, lorsque l'avion approche de la phase où cet élément serait utilisé.

Dans un mode de réalisation, le procédé comprend une étape consistant à annoter la base de données de navigation NAVDB.

Dans un mode de réalisation, les analyses des messages NOTAM conduisent à annoter (ajout de données en préservant les données originelles) la base de données de navigation NAVDB.

Dans un mode de réalisation, les messages NOTAM conduisent à modifier (remplacement par ajout et suppression de données) les bases de données de navigation NAVDB.

Dans un mode de réalisation, le fait déclencheur d'une étape de comparaison et/ou de notification étant fonction du contexte de vol et/ou d'une révision du plan de vol courant de l'aéronef.

Le plan de vol peut déterminer les opérations de comparaison.

Dans un mode de réalisation, le contexte de vol déclenche également des/certaines comparaisons. Le contexte de vol de l'aéronef comprend notamment les phases de montée, descente, croisière, décollage, atterrissage, etc. Le contexte de vol peut servir à filtrer/sélectionner les messages NOTAM pertinents i.e. devant être pris en compte pour le plan de vol de l'aéronef (e.g. courant, potentiel, révisé).

Dans un mode de réalisation, une révision du plan de vol déclenche des/certaines comparaisons. Les informations révélées par le contenus des messages NOTAM peuvent être mobilisées à différentes occasions : a) insertion d'un élément marqué comme indisponible lors de la création ou de la modification d'un plan de vol ; b) chargement d'un plan de vol mémorisé auparavant par le système, ou transféré depuis un autre (typiquement, le chargement sur le FMS d'un plan de vol préparé sur un EFB), contenant cet élément indisponible ; c) insertion d'une portion de plan de vol passant à proximité d'une radiobalise indisponible, pouvant entraîner une perte de précision de position. Pendant le vol, l'arrivée dans la zone où cette balise devrait être utilisée (si elle était disponible) pourra également être détectée ;
Dans un développement, le procédé comprend une étape consistant à émettre une notification de rappel en cas d'utilisation d'un élément de la base de données de navigation déterminé comme indisponible.

Dans un mode de réalisation, le procédé comprend une étape consistant à collecter une pluralité de messages aux navigants aériens. Le procédé peut alors répéter les étapes précédemment décrites (e.g. étapes de comparaison des contenus desdits messages avec les éléments de base de données de navigation, étapes de notification, etc).

Dans un mode de réalisation, le contenu d'un message est enrichi par des données externes de type non-avionique.

Dans un mode de réalisation, les contenus des messages collectés peuvent faire l'objet de traitements (par exemple des tests (logiques et/ou des croisements avec d'autres bases de données (non-avionique, i.e. du « monde ouvert »).

Dans un mode de réalisation, au moins une partie d'un message aux navigants aériens est lisible par ordinateur. Actuellement les messages NOTAMs sont des données texte, comprenant du langage naturel faiblement ou non-structurées au sens informatique. Dans un mode de réalisation, les messages NOTAM sont lisibles par ordinateur (« machine-readable » en anglais).

Il est décrit un produit programme d'ordinateur, ledit programme d'ordinateur comprenant des instructions de code permettant d'effectuer une ou plusieurs des étapes du procédé, lorsque ledit programme est exécuté sur un ordinateur.

Il est décrit un système comprenant des moyens pour mettre en oeuvre une ou plusieurs des étapes du procédé.

Dans un mode de réalisation, le système comprend un sac de vol électronique EFB et/ou un système de gestion de vol FMS.

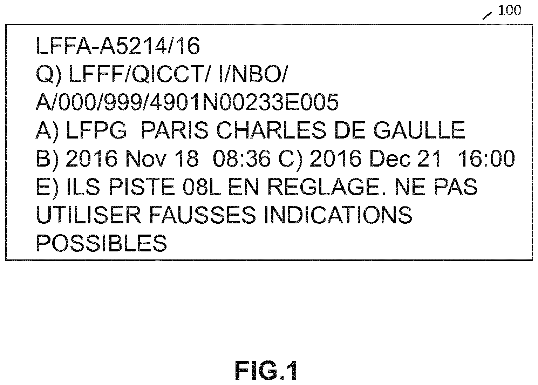

La figure 1 illustre un exemple de message aux navigants aériens NOTAM 100.

Dans l'exemple, la première ligne correspond à l'émetteur et au numéro d'identification du NOTAM.

La deuxième ligne correspond à la « qualification » du NOTAM. Ce champ est assez peu lisible par un humain mais peut se révéler être utile dans une perspective d'exploitation automatique. Le code LFFF indique que le message concerne la FIR (« *Flight Information Région* ») de Paris. Le code QICCT indique qu'une balise ILS (IC) ne doit pas être utilisée car en cours de test (CT). Ce champ peut par exemple être utile à des fins de filtrage. Le code I concerne les vols IFR. Le code N pour NOTAM est sélectionné pour retenir l'attention immédiate de tout opérateur d'avion. Le code B est sélectionné pour figurer sur les PIB (« *Pre-flight Information Bulletins* »)*.* Le code O indique qu'il s'agit d'un message significatif pour les opérations de vol. Le code 000/999 indique que les altitudes concernées s'étendent à partir du sol mais sans limite supérieure. Le code 4901N00233E005 indique que le NOTAM s'applique dans un rayon de 5 milles nautiques autour des coordonnées 49°01' N, 002°33' E.

La troisième ligne indique le code et nom en clair de l'aéroport concerné.

La quatrième ligne indique les dates de début et de fin de validité du message NOTAM. Les messages NOTAM sont en effet généralement associés avec des dates de validité (obsolescence programmée, date d'expiration). Des messages NOTAM peuvent être diffusés de manière anticipée (e.g. NOTAM émis avant le début d'indisponibilité effective, si elle est prévisible).

La cinquième ligne est du texte libre, i.e. en langage naturel (par opposition avec un langage formel, i.e. du texte non contraint ou structuré ou formalisé). Il existe une liste (facultative) de termes et d'abréviations à utiliser pour les événements courants, mais la nature du contenu de ce champ peut être de fait très variable (stylistique, grammaire, variété lexicale, etc). Ce champ reprend dans l'exemple la seconde ligne sous forme de langage naturel et la complète (en l'espèce en indiquant l'ILS concerné).

L'exemple illustre que les messages NOTAM (actuels) peuvent combiner (ou juxtaposer) des éléments textuels exprimés en langage formel (ou sous forme relativement codifiée ou normée, donc relativement manipulable par les machines) à côté d'éléments exprimés sous forme de langage naturel (qui posent des problèmes spécifiques en matière de traitement automatique des langues, e.g. analyse syntaxique, ambigüités).

En matière d'information aéronautique (au sens large), un certain nombre de sources textuelles peuvent être manipulées par le procédé selon l'invention.

Par exemple, dans le futur, des évolutions des messages NOTAM actuels (NOTAM dit ICAO) appelées « DIGITAL NOTAM » ou « D-NOTAM » devraient formaliser plus encore les contenus. Certaines approches proposent par exemple d'inclure des liens électroniques depuis les messages D-NOTAM vers des bases de données externes et/ou à structurer les D-NOTAM selon une approche par événements. Ces évolutions vont dans le sens d'une codification croissante, mais des éléments en langage naturel devraient subsister.

La spécification « draft » de la dernière spécification date de 2014. Un Digital NOTAM est actuellement une extension basé sur l'AIXM 5.1, en XML (langage de balisage extensible, métalangage informatique de balisage générique). Un Digital NOTAM comprend des informations « Event » qui contient un ou plusieurs objets «NOTAM» générés suite à cet événement, ainsi que différents champs indiquant d'éventuelles modifications temporaires ou permanentes des données statiques. Un objet « NOTAM » contenu dans le Digital NOTAM contient lui-même le NOTAM (« ICAO ») classique. Un Digital NOTAM ne comprend donc pas significativement plus d'information qu'avant, i.e. que le NOTAM ICAO venant de l'AFTN. En tous les cas, il demeure nécessaire d'analyser le texte de l'objet NOTAM pour évaluer l'impact opérationnel.

Par ailleurs, des sources d'informations comme les « SUP-AIP » comprennent également des informations potentiellement pertinentes (i.e. pouvant avoir un impact sur le plan de vol). En France la liste des ZRT (Zones réglementées temporaires) est publiée sur un document appelée "Complément aux cartes aéronautique" édité par le SIA, leur activation est quant à elle publiée sous forme de SUP AIP. Un SUP AIP peut énoncer des faits et des conditions de lieu, de validité, d'objet, d'activité (e.g. protection, passage en service), des dates et heures d'activité, des conditions (e.g. de pénétration, de contournement). Avantageusement, les messages de type NOTAM ou SUP-AIP proviennent de sources authentifiées et/ou à l'intégrité vérifiée ou vérifiable.

Dans certains modes de réalisation, de manière encore plus générale, même si elle est non nominale i.e. d'une importance pouvant être parfois anecdotique, l'information provenant du « monde ouvert » i.e. cherchée et extraite d'Internet peut être accédée et analysée par le procédé selon l'invention (moyennant par exemple des vérifications d'authenticité et/ou d'intégrité de ces données tierces). Par exemple, peuvent être prises en compte les sources documentaires faisant état de risques d'attentats ou de menaces spécifiques (e.g. présence de stylos laser, de drones, d'activité volcanique inhabituelle, etc), notifiant de la présence d'oiseaux migrateurs ou à proximité des aéroports, de manifestations aéronautiques (e.g. montgolfières), d'incidents divers, etc. Une probabilité d'occurrence d'un événement peut être extrêmement faible mais sa sévérité peut être exceptionnelle : ces modes de réalisation de l'invention peuvent être avantageux.

En d'autres termes, un message textuel manipulé par l'invention comprend du langage naturel (lisible par l'homme, plus difficilement par la machine) et/ou des éléments codifiés (lisible par l'homme, et également par la machine).

De manière générale donc, bien que pouvant être « décodés », les messages textuels actuellement émis et manipulés dans les systèmes existants sont des données exprimées en langage naturel, i.e. « non-structurées » (ou peu structurées) au sens informatique.

De manière encore plus générale, des messages comprenant des éléments sous forme d'images et/ou de vidéos (e.g. SUP AIP) peuvent également être manipulés par l'invention. Des exemples de traitements sont décrits ultérieurement.

Dans un mode de réalisation, les messages manipulés par l'invention sont des messages manipulables par ordinateur (i.e. des messages formatés ou structurés de manière à pouvoir être traités par ordinateur, e.g. « *machine-readable* », par exemple en XML). Avantageusement, des rendus ou des visualisations de ces données permettent à la fois une compréhension humaine mais également et surtout des traitements par la machine, qui peut ainsi effectuer des comparaisons, effectuer des traitements symboliques, des conversions, et ainsi détecter des erreurs et/ou des incohérences et/ou des inconsistances dans les données des messages NOTAM mais également en considération de données externes (e.g. météorologie, instructions ATC, etc).

Il est important de noter que si dans le cas général les messages (par exemple NOTAM) peuvent être indépendants, dans certains cas un premier message NOTAM peut modifier (e.g. préciser, rendre caduc, rendre périmé, invalider en partie ou en totalité) un ou plusieurs autres messages NOTAM (passés ou futurs parfois). Par exemple, un message indiquant une zone de travaux sur un aéroport peut être modifié par un second message ultérieur indiquant la fermeture de cet aéroport.

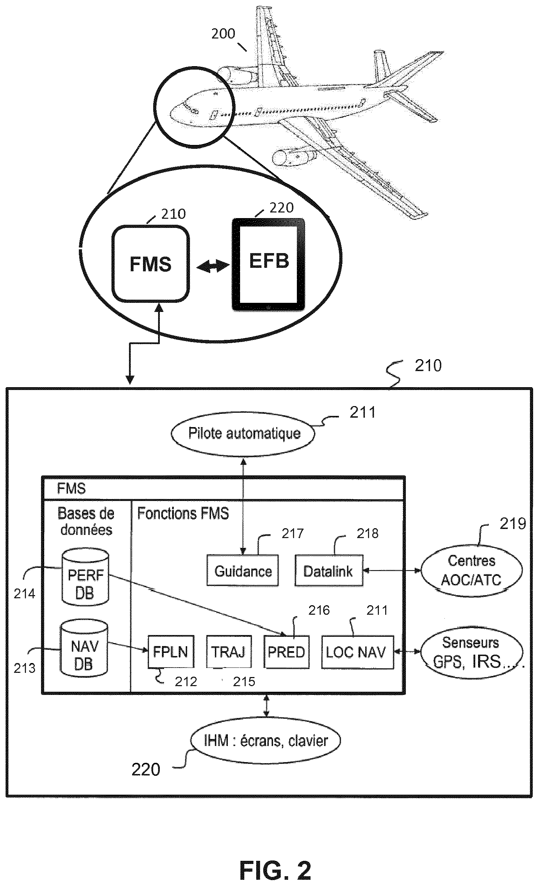

La figure 2 illustre schématiquement la structure et les fonctions d'un système de gestion de vol de type FMS connu et d'un sac de vol électronique EFB.

La figure 2 montre un aéronef 200, dont le cockpit comprend un système de gestion de vol FMS 210 (acronyme FMS pour "Flight Management System"), de type avionique, et parfois un sac de vol électronique EFB 220 (acronyme EFB pour "Electronic Flight Bag"), de type non-avionique (non certifié, « monde ouvert »).

Les étapes du procédé selon l'invention peuvent être mises en oeuvre par différents matériels, notamment par un ou plusieurs de ces FMS et/ou un ou plusieurs de ces EFB. D'autres systèmes avionique (non représentés) peuvent également gérer (recevoir, traiter) des messages NOTAM. Ces systèmes avioniques (i.e. des systèmes certifiés ou régulés) comprennent notamment des imprimantes AOC ou des EFB de type avionique.

Dans un mode de réalisation, toutes les étapes peuvent être réalisées par ou sur un EFB. En pratique, un EFB comprend des fonctionnalités bien adaptées pour la manipulation des messages NOTAM. Dans d'autres modes de réalisation, certaines étapes peuvent être réalisées pour partie dans un EFB tandis que le reste des étapes peut être réalisé par le FMS. Dans certains modes de réalisation, certaines étapes peuvent aussi être réalisées conjointement ou concurremment par le FMS et l'EFB.

Chaque type de système est d'abord décrit de manière individuelle puis certaines interactions entre ces deux types de système sont décrites.

Le terme FMS 210 désigne un système de gestion de vol (norme ARINC 702), c'est-à-dire un système de type avionique (certifié, régulé). Lors de la préparation d'un vol ou lors d'un déroutement, l'équipage procède à la saisie de différentes informations relatives au déroulement du vol, typiquement en utilisant ce dispositif de gestion. Un FMS comprend généralement des moyens de saisie et des moyens d'affichage, ainsi que des moyens de calcul. Un opérateur, par exemple le pilote ou le copilote, peut saisir via les moyens de saisie des informations telles que des contraintes (e.g. *overfly,* altitude...) associées à des points de cheminement connus ou « waypoints », c'est-à-dire des points à la verticale desquels l'aéronef doit passer. Les moyens de calcul associés au FMS permettent notamment de calculer, à partir du plan de vol comprenant la liste des *waypoints,* la trajectoire de l'aéronef, en fonction de la géométrie entre les *waypoints,* des contraintes associées et/ou des conditions d'altitude et de vitesse, et aussi les heures de passage et fuel restant en chaque point.

Un système de type FMS 210 est généralement disposé dans un cockpit et dispose d'une interface homme-machine comprenant des moyens de saisie, par exemple formés par un clavier, et des moyens d'affichage, par exemple formés par un écran d'affichage, ou bien simplement un écran d'affichage tactile, ainsi qu'au moins les fonctions suivantes: a) Navigation (LOCNAV) 211, pour effectuer la localisation optimale de l'aéronef en fonction des moyens de géolocalisation tels que le géopositionnement par satellite ou GPS, GALILEO, les balises de radionavigation VHF, les centrales inertielles. Ce module communique avec les dispositifs de géolocalisation précités ; b) Plan de vol (FPLN) 212, pour saisir les éléments géographiques constituant le "squelette" de la route à suivre, tels que les points imposés par les procédures de départ et d'arrivée, les points de cheminement, les couloirs aériens, communément désignés "airways" selon la terminologie anglaise. Les procédés et des systèmes décrits affectent ou concernent cette partie du calculateur ; c) Base de données de navigation (NAVDB) 213, pour construire des routes géographiques et des procédures à partir de données incluses dans les bases relatives aux points, balises, legs d'interception ou d'altitude, etc; d) Base de données de performance, (PERFDB) 214, contenant les paramètres aérodynamiques et moteurs de l'appareil ; e) Trajectoire latérale (TRAJ) 215, pour construire une trajectoire continue à partir des points du plan de vol, respectant les performances de l'aéronef et les contraintes de confinement (RNP) ; f) Prédictions (PRED) 216, pour construire un profil vertical optimisé sur la trajectoire latérale et verticale et donnant les estimations de distance, heure, altitude, vitesse, carburant et vent notamment sur chaque point, à chaque changement de paramètre de pilotage et à destination, qui seront affichées à l'équipage ; g) Guidage (GUID) 217, pour guider dans les plans latéraux et verticaux l'aéronef sur sa trajectoire tridimensionnelle, tout en optimisant sa vitesse, à l'aide des informations calculées par la fonction Prédictions 216. Dans un aéronef équipé d'un dispositif de pilotage automatique 210, ce dernier peut échanger des informations avec le module de guidage 207 ; h) Liaison de données numériques (DATALINK) 218 pour échanger des informations de vol entre les fonctions Plan de vol/Prédictions et les centres de contrôle ou les autres aéronefs 219; i) un ou plusieurs écrans, notamment les écrans dits FMD, ND et VD.

Un EFB 220 désigne des librairies électroniques embarquées. Généralement traduit par "sac de vol électronique" ou "sacoche de vol électronique" ou "tablette de vol électronique", un EFB est un appareil électronique portable ou fixe (i.e. inséré dans le cockpit de l'aéronef) et utilisé par le personnel navigant (par exemple pilotes, maintenance, cabine..). Un EFB peut fournir des informations de vol à l'équipage, aidant celui-ci à effectuer des tâches (avec moins de papier). En pratique, il s'agit généralement d'une tablette informatique du commerce. Une ou plusieurs applications permettent la gestion de l'information pour des tâches de gestion de vol. Ces plateformes informatiques d'usage général sont destinées à réduire ou remplacer le matériel de référence sous forme papier, souvent trouvés dans le bagage à main du *"Pilot Flight Bag"* et dont la manipulation peut être fastidieuse. La documentation papier de référence comprend généralement les manuels de pilotage, les différentes cartes de navigation et les manuels d'opérations au sol. Ces documentations sont avantageusement dématérialisées dans un EFB. En outre, un EFB peut héberger des applications logicielles spécialement conçues pour automatiser des opérations conduites manuellement en temps normal, comme par exemple les calculs de performances de décollage (calcul de vitesse limite, etc).

Les systèmes EFB et FMS peuvent interagir. L'interaction est actuellement asymétrique: le coeur avionique FMS est certifié, ce qui interdit ou limite généralement l'injection directe par voie électronique de données de l'extérieur vers le FMS (les saisies sont manuelles, effectuées par le pilote) ; cette configuration est néanmoins susceptible de changer. A l'inverse, les données (numériques) en sortie du FMS constituent autant de données d'entrée pour un EFB qui peut effectuer de nombreux calculs (vérifications, simulations, etc). De manière croissante, la fonction FMS peut être émulée i.e. le code du FMS peut être porté et exécuté dans ou par l'EFB, ce qui permet une « intégration » plus poussée. De fait, un EFB peut actuellement réaliser presque toutes les tâches envisageables pour un vol ou une mission (calcul de performances, calcul de plan de vol, détermination des alertes, calcul de routes alternatives etc). Utilisant les mêmes algorithmes que le coeur avionique certifié, un EFB peut construire nativement des plans de vol acceptables par le coeur avionique certifié. Disposant de capacités de calcul pouvant être plus étendues, éventuellement encore amplifiées par la possibilité d'utiliser des ressources de calcul externes ou distantes (« Cloud », processeurs multi-coeurs, etc), la périphérie du coeur avionique joue un rôle croissant.

Les traitements et analyses des messages peuvent donc avantageusement être réalisés exclusivement sur un EFB, lequel peut déployer un ensemble de technologie très étendu, notamment en traitement automatique des langues, ou en analyse d'image (confer la liste ultérieure des traitements de l'information).

Dans un mode de réalisation, le FMS peut réaliser une partie des étapes du procédé en collectant ces messages NOTAM par le canal dit AOC. Dans une variante, l'EFB collecte les messages par son canal propre (e.g. accès Internet sécurisé) et envoie au pilote et optionnellement au FMS une alerte sur les (seuls) points du plan de vol utilisant une ressource rendue indisponible par l'analyse du contenu d'un message NOTAM.

Dans un mode de réalisation, un système EFB peut obtenir un ou plusieurs messages NOTAM par une connexion Internet (les systèmes FMS disposent de plus en plus d'une liaison de données par satellite, qui peut également être utilisée, en complément ou en substitution).

Quand la planification du vol est faite à l'aide d'un système embarqué (FMS) et/ou EFB, l'ensemble de ces informations peut être stocké dans une base de données de navigation (NavDB).

Au-delà d'échanges EFB/FMS, des systèmes tiers peuvent intervenir. Dans certains cas, un prestataire externe peut fournir, par exemple à distance, aux utilisateurs (tels que les compagnies aériennes) le contenu de la base de données de navigation NavDB. Le prestataire par l'intermédiaire d'un serveur met par exemple ce contenu sous forme informatique à partir des publications d'information aéronautique (AIP) officielles, garantit leur intégrité par rapport à ces sources, et les met à jour régulièrement. Concernant la mise à jour des données, la fréquence de mise à jour des bases de données est variable. Certaines sont régulières mais peu fréquentes (cycles AIRAC de 28 jours). Ces mises à jour sont bien adaptées aux modifications à long terme comme la mise en service, le retrait, ou une modification majeure d'une installation aéroportuaire. D'autres données sont mises à jour beaucoup plus rapidement et sont accessibles en temps-réel (e.g. données météorologiques).

Dans un mode de réalisation, les traitements opérés sur les messages peuvent être réalisés directement par le système embarqué FMS et/ou l'EFB utilisé. Dans un mode de réalisation, les traitements opérés sur les messages peuvent être réalisés de manière centralisée par un organisme ou une entité fournissant les NOTAM sous forme décodée en plus de leur forme brute (cette dernière possibilité permettant de vérifier et de compléter le décodage automatisé par une intervention humaine).

Dans un mode de réalisation, les messages NOTAM sont reçus, collectés et traités par un EFB. En effet, si un pilote dispose d'un EFB, celui-ci lui permet de récupérer automatiquement l'ensemble des NOTAM liés au plan de vol en cours de définition sur l'appareil (c'est-à-dire en filtrant ceux qui concernent les aéroports de départ et d'arrivée ainsi que ceux qui se trouvent le long de la trajectoire, et ceux qui concernent les régions d'informations de vol traversées). Cette fonction peut en complément ou en substitution être assurée par un FMS doté d'une liaison de données.

Dans un mode de réalisation, le FMS manipule un plan de vol révisé et fournit une liste de points de plan de vol, lesquels sont à leur tour manipulés par l'EFB qui croise les informations avec les messages NOTAM. En d'autres termes, dans ce schéma d'interaction, le FMS permet de constituer le fil d'Ariane de l'exploration combinatoire (les sorties du FMS servent à trier ce qui va être manipulé dans l'EFB).

Dans certaines situations, le FMS peut établir des listes noires (par exemple de radiobalises ou de satellites GPS), en fonction de NOTAM reçus, que le pilote peut confirmer à l'intermédiaire de l'EFB.

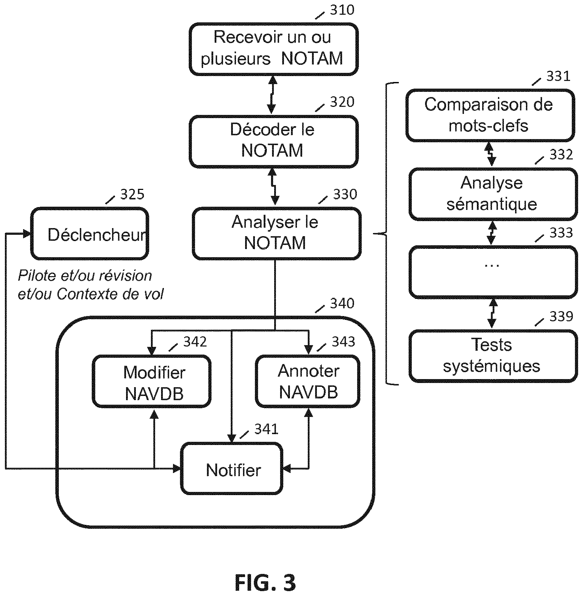

La figure 3 illustre des exemples d'étapes du procédé selon l'invention.

A l'étape 310, (au moins) un message NOTAM est reçu par Internet dans un EFB et/ou par un réseau SATCOM dans le FMS. Les messages NOTAM sont collectés et sont stockés en local et/ou à distance.

A l'étape 320, un message NOTAM parmi la pluralité est « décodé ». S'il comprend du langage naturel, le procédé comprend par exemple des étapes d'extraction, classification, extraction de mots-clefs. Si le message est lisible par ordinateur, le contenu peut être assimilé dans une base de données spécifique.

Après l'étape de décodage 320, le procédé comprend une étape 330 consistant à analyser un NOTAM (parmi une pluralité). Différents attributs de ce message (parties de contenus, propriétés ou conclusions logiques, etc) sont alors déterminés.

Dans un mode de réalisation, le procédé d'analyse comprend une étape consistant à déterminer (e.g. détecter ou calculer) un état d'indisponibilité d'une installation ou d'un autre élément, tel que signalé par le contenu du message. Cette détermination peut notamment s'effectuer en fonction du plan de vol (e.g. courant ou potentiel i.e. révisé)

Dans un mode de réalisation, le procédé détermine une liste d'éléments indisponibles (ainsi que les dates associées à ces signalements). En d'autres termes, le procédé peut comprendre une étape consistant à accumuler ou stocker ou assimiler (e.g. trier, traiter, dédupliquer, fusionner, vérifier) les informations d'indisponibilités.

Dans un mode de réalisation, l'indisponibilité (l'information manipulée) est binaire (état binaire oui/disponible ; non/indisponible).

Certains modes de réalisation de l'invention manipulent des états quantifiés ou discrétisés selon un nombre fini de valeurs ou d'états. Dans certains modes de réalisation, les indisponibilités sont graduées ou pondérées ou modulées (ou quantifiées ou probabilistes i.e. « risque d'indisponibilité »). Dans certains modes de réalisation de l'invention, des risques ou probabilités sont manipulés. Dans certains modes de réalisation, des alertes ciblées peuvent être manipulées (par exemple une information indiquant une piste raccourcie), i.e. des informations ne relevant pas d'une indisponibilité au sens stricte mais venant moduler ou préciser des éléments d'information significatifs pour le plan de vol ou la mission (par exemple déroutement sur un aéroport comprenant cette piste raccourcie)

L'étape d'analyse 330 comprend une ou plusieurs étapes de traitement (les étapes décrites ci-après peuvent être combinées). Différentes techniques d'analyse textuelle, d'images et/ou de vidéos peuvent être mises en oeuvre, de manière séquentielle ou parallèle (e.g. de manière concurrente).

Dans un mode de réalisation, le procédé comprend une étape 331 consistant à détecter un ou plusieurs mots-clefs parmi une pluralité de mots-clefs prédéfinis. Par exemple le mot « travaux » sera détecté dans le flux des messages NOTAM collectés.

Dans un mode de réalisation, l'étape d'analyse peut comprendre une étape consistant à comparer ces mots-clefs avec des mots-clefs prédéfinis.

Dans un mode de réalisation, le procédé comprend une étape d'analyse sémantique 332, cette analyse sémantique consistant notamment à faire correspondre un message NOTAM à un scénario parmi une pluralité de scénarios prédéfinis. Dans un mode de réalisation, l'analyse sémantique peut être réalisée en considérant l'accumulation de mots-clefs et/ou de leurs synonymes qui peut être indicative de la réalisation d'un scénario préétabli. Des méthodes de scoring peuvent être utilisées.

Dans un mode de réalisation, l'étape d'analyse comprend une étape consistant à collecter une pluralité de messages puis à effectuer un apprentissage supervisé sur les messages collectés, par exemple à des fins de classification automatique.

Dans un mode de réalisation, l'apprentissage est de type non-supervisé.

Dans un mode de réalisation, l'étape d'analyse comprend une ou plusieurs étapes d' « apprentissage profond » (« deep learning » en anglais). L'apprentissage profond désigne des méthodes de modélisation de données, utilisant notamment des réseaux de neurones.

Dans un mode de réalisation, l'étape d'analyse comprend une ou plusieurs étapes associées aux techniques de « big data » (littéralement « grosses données », ou méga-données ou données massives), le terme désignant des techniques spécifiques adaptées au traitement de données très volumineuses (i.e. capture, stockage, recherche, partage, analyse et visualisation des données). Par exemple, des techniques de fouille de données (« text mining » en anglais), d'indexation ou de visualisation (non exhaustif) peuvent être mises en oeuvre. En l'espèce, des statistiques peuvent être construites sur les indisponibilités observées sur de longues périodes, avec une résolution fine dans l'espace et le temps, des corrélations peuvent être déterminées entre différents paramètres de vols, etc.

Dans un mode de réalisation, l'étape d'analyse comprend une étape d'annotation (tagging en anglais), par le pilote ou d'autres opérateurs. Ces opérateurs tiers comprennent notamment les autorités de contrôle du trafic aérien (ATC) et/ou les centres d'opération des compagnies aériennes (AOC pour « Air Opérations Center »). Le pilote peut marquer dans ses favoris un message (ou un extrait de message, en particulier), partager ses signets, etc.

Dans un mode de réalisation, un premier message pouvant en modifier un second, le procédé comprend une étape consistant à « assimiler » (ou fusionner ou unifier) des messages (par exemple NOTAM) dans une base de données spécifique. Cette assimilation ou unification peut se faire de différentes manières. Une donnée d'un premier message peut être actualisée i.e. remplacée par la donnée d'un second message (gestion des faits i.e. des données factuelles, tels que révélés par les messages NOTAM). A un plus haut niveau d'abstraction, le contenu d'un message peut correspondre à une règle logique, laquelle peut modifier les messages ultérieurs et/ou passés. L'analyse des messages peut donc être effectuée par gestion des faits et/ou des règles dérivées des contenus des différents messages.

Dans un mode de réalisation, l'assimilation (d'un NOTAM dans la base de données consolidée ou fusionnée) est conditionnelle. La prise en compte d'un NOTAM erroné peut avoir des effets systémiques i.e. en cascade. Il s'agit s'assimiler conditionnellement chaque NOTAM reçu après des tests machine et/ou boucle humaine.

Dans un mode de réalisation, il peut être déterminé de manière combinatoire un ensemble de plans de vols alternatifs, puis déterminé les intersections avec l'ensemble des messages (notamment NOTAM) i.e. les opportunités (avantages) ou les impossibilités ou désavantages associés à chacun des plans de vol candidats, lesquels peuvent être triés ou hiérarchisés ou notés (puis éventuellement présentés au pilote). Dans un mode de réalisation, ces évaluations peuvent être conduites en permanence en arrière-plan, et par exemple peuvent utiliser les capacités de calcul inexploitées de l'EFB et/ou du FMS.

Un message donné pouvant modifier des messages du passé et/ou du futur, des arbres de décision ou des analyses « systémiques » peuvent être déterminés. Par exemple, un choix de navigation précis peut conduire à des situations radicalement différentes, dont certaines très défavorables (risques accrus, augmentation de la consommation de carburant, amenuisement des options de vol ultérieures, etc). Des analyses ou simulations appropriées peuvent révéler la criticité associée à ce choix, des analyses ou simulations se fondant en particulier sur les informations extraites des messages aux navigants aériens.

Dans un mode de réalisation, la gestion des règles logiques extraites des messages peut conduire à la détection et donc à la gestion de risques « systémiques » (un fait ou une règle peut avoir des conséquences en cascade sur le plan de vol).

Dans un mode de réalisation, des images présentes dans des messages peuvent être analysées et du sens peut être extrait de contenus visuels. Par exemple, des traitements de type ROC pour Reconnaissance Optique de Caractères, OCR en anglais, peuvent être mis en oeuvre, de façon à transformer une carte issue d'un document SUP-AIP en éléments manipulables par le procédé selon l'invention. Par extension, de l'information peut être extraite de contenus vidéo (séquences d'images fixes). Des étapes de reconnaissance de forme peuvent ajouter de l'information pour la prise de décision.

Dans un mode de réalisation, de manière additionnelle ou complémentaire à des étapes d'analyse réalisées par des ordinateurs, des analyses humaines peuvent être injectées dans le procédé d'analyse et de prise en compte des messages: les messages aux navigants peuvent notamment être préalablement vérifiés et/ou annotés et/ou reformulés et/ou validés et/ou authentifiés et/ou « garantis » par différents opérateurs et/ou organisations. Techniquement, ces étapes peuvent être réalisées à distance.

Les messages sont systématiquement analysés (ils sont au moins triés).

L'étape de notification 341 peut être déclenchée 325 de différentes manières. Cette notification peut être réalisée de manière continue au cours du temps (e.g. périodique, intermittente, régulière dans le temps), ou à la demande (e.g. par le pilote ou un opérateur tiers), ou bien encore en fonction du plan de vol et/ou du contexte de vol (selon les phases de décollage, montée, croisière, atterrissage, roulage etc).

Après notification, le cas échéant (selon une boucle semi-ouverte, i.e. avec un contrôle du pilote), la base de données de navigation NAVDB peut être annotée (ou modifiée).

Concernant le plan de vol, il peut notamment être établi des correspondances ou une corrélation entre les dates de validité des différents messages reçus NOTAM et le déroulement prévu du vol (par exemple si une piste d'atterrissage donnée est disponible à un instant donné mais ne le sera plus à l'heure d'arrivée de l'avion). Les comparaisons peuvent être effectuées dans les deux sens : le plan de vol peut fournir des critères servant à trier les messages et inversement le contenu des messages peut amener à reconsidérer le déroulement du vol ou certaines de ses alternatives.

Au fur et à mesure du déroulement du plan de vol, des éléments présents dans le plan de vol peuvent être filtrés et/ou servir de déclencheurs aux tests de détection ou de cohérence. Par exemple, une révision du plan de vol effectuée par le pilote peut conduire à considérer un aéroport de déroutement. Les messages NOTAM relatifs à cet aéroport seront alors sélectionnés puis analysés. Ces messages peuvent aussi être pré-analysés, de manière à anticiper les différentes options offertes au pilote et lui indiquer qu'un terrain habituellement favorable pour un déroutement n'est pas une option à cause d'un NOTAM.

Dans certains modes de réalisation, des déclencheurs (e.g. événements, temps, phases de vol, etc) ne sont pas nécessaires. Par exemple, les zones potentiellement utilisables pendant un déroutement (qui peuvent être très distantes) peuvent servir de critères pour l'analyse des messages concernant ces zones. Le volume de messages peut être très important, bien au- delà de ce qui est gérable par le pilote du fait de la combinatoire des trajectoires potentielles. Sur le plan architectural, cette fonction d'anticipation peut être effectuée par une application exécutée sur un EFB (une application EFB connecté peut être effectuée à bord et/ou au sol).

Différentes étapes 340 sont possibles après l'analyse d'un ou de plusieurs messages NOTAM.

Dans un mode de réalisation, la base de données de navigation NavDB est modifiée 342, de manière directe, i.e. les données originelles de la NavDB sont modifiées en fonction des analyses conduites sur le contenu des messages. Cette modification directe des données peut s'assortir d'une copie de sauvegarde ou de restauration des données en cas de besoin.

Dans un mode de réalisation, étant donné que l'intégrité de la base de données de navigation NavDB peut avoir à être garantie, la base de données de navigation NavDB est conservée en l'état et des annotations ou tags ou métadonnées sont associées 343 à la base de données de navigation NavDB (qui en tant que telle reste intacte). Une « surcouche » de données est ainsi créée (base de données associées, etc)

A l'étape 341, différentes modalités de retour d'information ou notifications sont possibles.

De manière générale tout appel à un élément signalé comme étant indisponible par un NOTAM est notifié 341 (ou restitué) au pilote, selon différentes modalités (visuelles et/ou sonores et/ou haptiques, etc). En terme de retour au pilote, *a minima,* le pilote est notifié 341 d'une indisponibilité relative à son plan de vol actuel ou révisé ou potentiel. Par exemple, si des travaux sont en cours dans l'aéroport sélectionnés, le pilote en est informé ou averti. De tels avertissements permettent au pilote de constater son erreur et de la corriger rapidement.

Dans un mode de réalisation, le procédé comprend une étape consistant à notifier le pilote pendant le vol d'une perte de précision de la position de l'aéronef lorsqu'il pénètre dans une zone où une balise de navigation, utilisée en temps normal, est indisponible. Ceci peut concerner en particulier les procédures d'arrivée et d'approche.

Dans un mode de réalisation, le procédé comprend une étape consistant à établir la liste des éléments de navigations indisponibles (radiobalises, satellites GPS...). Avantageusement, l'établissement automatique cette liste permet d'éviter de nécessiter une saisie manuelle.

Dans un mode de réalisation, le procédé comprend une étape consistant à mettre en évidence un ou plusieurs éléments indisponibles quand la base de données NavDB est consultée, en particulier lors de l'affichage sur une visualisation de type ND (Navigation Display) des éléments de la NavDB à proximité de l'aéronef.

Dans le cas général, le procédé selon l'invention n'interdit pas, et ne cache pas, des actions associées à des éléments indisponibles. Maître à bord, le pilote peut toujours passer outre une restriction de manière consciente, s'il le juge nécessaire. Toutefois, dans certains cas, il est possible de modifier 342 (ou d'annoter 343 i.e. d'ajouter des données contextuelles) le contenu de la NavDB (dont l'intégrité doit être garantie). En d'autres termes, les conséquences de l'analyse des NOTAM en amont peuvent être des modifications de données exclusivement à destination d'une machine (i.e. sans retour sensoriel à destination du pilote). Par exemple, dans certains modes de réalisation, la sélection d'un aéroport de déroutement comprenant une indisponibilité enseignée par un NOTAM peut être rendue impossible (e.g. tri en amont de la requête du pilote). Afin de maintenir une lisibilité du système d'information, ce type d'assistance peut néanmoins être « débrayable » (sur demande du pilote, les décisions automatiques proactives sont interrompues).

Dans un mode de réalisation, les messages NOTAM sont indexés et sont cherchables (par exemple par le pilote). Ces critères de recherche peuvent délimiter l'espace de recherche (par exemple ceux concernant les seuls aéroports atteignables avec le carburant embarqué)

Dans un mode de réalisation, au-delà de la restitution sensorielle d'information au pilote, le procédé peut comprendre une ou plusieurs étapes visant à déterminer puis à gérer les conflits impliqués par une ou plusieurs indisponibilités indiquées par les messages NOTAM. Certaines options quant au plan de vol peuvent être rendues impossibles (non-volables) en raison d'informations contenues dans les messages. Dans d'autres cas, à défaut d'impossibilités, il peut s'ensuivre des pertes de précisions ou des dégradations locales. De manière systématique, des plans de vol alternatifs peuvent être déterminés, par exemple en arrière-plan, et être mobilisables en cas de besoin. Par exemple, si les systèmes d'approche de l'aéronef tombent en panne et que simultanément les conditions météorologiques s'avèrent être mauvaises, le procédé peut avoir déterminé en arrière plan des plans de vol alternatifs, prenant en compte les messages NOTAM, régulièrement collectés et analysés. Un fil d'Ariane ou guide dans la gestion de la combinatoire des possibles réside notamment dans le plan de vol et ses variantes (les points de plan de vol permettent d'effectuer des tris ou des sélections dans les données qui doivent être manipulées).

Certains aspects relatifs aux modes de réalisation de l'invention sont décrits ci-après.

La présente invention peut s'implémenter à partir d'éléments matériel et/ou logiciel. Elle peut être disponible en tant que produit programme d'ordinateur sur un support lisible par ordinateur. Le support peut être électronique, magnétique, optique ou électromagnétique.

Les moyens ou ressources informatiques peuvent être centralisés et/ou être distribués ("Cloud computing"), éventuellement avec ou selon des technologies de pair-à-pair et/ou de virtualisation et/ou de redondance. Le code logiciel peut être exécuté sur n'importe quel processeur approprié (par exemple, un microprocesseur) ou coeur de processeur ou un ensemble de processeurs, qu'ils soient prévus dans un dispositif de calcul unique ou répartis entre plusieurs dispositifs de calcul. La mise en oeuvre informatique de l'invention peut utiliser des systèmes centralisés (e.g. client-serveur ou maître-esclave) et/ou des systèmes distribués (e.g. architecture de type pair-à-pair utilisant des ressources informatiques accessibles, éventuellement de manière opportuniste e.g. réseaux ad hoc, etc).

Le système (ou ses variantes) implémentant une ou plusieurs des étapes du procédé peut utiliser un ou plusieurs circuits électroniques dédiés ou un circuit à usage général. Le procédé peut aussi être mis en oeuvre sur une machine de calcul reprogrammable (un processeur ou un micro contrôleur, par exemple) exécutant un programme comprenant une séquence d'instructions, ou sur une machine de calcul dédiée (par exemple un ensemble de portes logiques comme un FPGA ou un ASIC, ou tout autre module matériel). Un circuit dédié peut notamment accélérer les performances, par exemple en matière d'accès au journal de bord. A titre d'exemple d'architecture matérielle adaptée à mettre en oeuvre l'invention, un dispositif peut comporter un bus de communication auquel sont reliés une unité centrale de traitement ou microprocesseur (CPU, acronyme de «Central Processing Unit» en anglais), lequel processeur peut être "multi-core" ou "many-core"; une mémoire morte (ROM, acronyme de «Read Only Memory» en anglais) pouvant comporter les programmes nécessaires à la mise en oeuvre de l'invention; une mémoire vive ou mémoire cache (RAM, acronyme de «Random Access Memory» en anglais) comportant des registres adaptés à enregistrer des variables et paramètres créés et modifiés au cours de l'exécution des programmes précités; et une interface de communication ou E/S (I/O acronyme de «Input/output» en anglais) adaptée à transmettre et à recevoir des données.

Dans le cas où l'invention est implantée sur une machine de calcul reprogrammable, le programme correspondant (c'est-à-dire la séquence d'instructions) peut être stocké dans ou sur un médium de stockage amovible (par exemple une mémoire flash, une carte SD), un moyen de stockage de masse tel que un disque dur e.g. un SSD) ou non-amovible, volatile ou non-volatile, ce médium de stockage étant lisible partiellement ou totalement par un ordinateur ou un processeur.

La référence à un programme d'ordinateur qui, lorsqu'il est exécuté, effectue l'une quelconque des fonctions décrites précédemment, ne se limite pas à un programme d'application s'exécutant sur un ordinateur hôte unique. Au contraire, les termes programme d'ordinateur et logiciel sont utilisés ici dans un sens général pour faire référence à tout type de code informatique (par exemple un logiciel d'application, un micro logiciel, un microcode, ou toute autre forme d'instruction d'ordinateur) qui peut être utilisé pour programmer un ou plusieurs processeurs pour mettre en oeuvre des étapes du procédé.

## Revendications

1. Procédé mis en oeuvre par ordinateur de gestion d'un message aux navigants aériens comprenant les étapes consistant à:
- recevoir au moins un message aux navigants aériens;
- recevoir un ou plusieurs éléments d'une base de données de navigation associée à un plan de vol d'un aéronef;
- comparer le contenu du message aux navigants aériens reçu avec les éléments de la base de données de navigation associée à un plan de vol d'un aéronef.

2. Procédé selon la revendication 1, comprenant une étape consistant à déterminer à partir du contenu du message reçu qu'un élément de la base de données de navigation associée au plan de vol de l'aéronef est indisponible.

3. Procédé selon la revendication 1, l'étape consistant à comparer le contenu du message avec une base de données associée à un plan de vol de l'aéronef comprenant une étape consistant à déterminer la présence d'un ou de plusieurs mots-clefs parmi une pluralité de mots-clefs prédéfinis.

4. Procédé selon la revendication 1, comprenant une étape consistant à associer le contenu d'un message avec un plan de vol parmi une pluralité.

5. Procédé selon la revendication 1, comprenant une étape consistant à réaliser une analyse sémantique du contenu du message exprimé en langage naturel.

6. Procédé selon l'une quelconque des revendications précédentes, comprenant l'étape consistant à notifier le pilote si la présence d'un élément indisponible a été déterminée.

7. Procédé selon la revendication 6, comprenant l'étape consistant à recevoir confirmation de l'élément déterminé comme indisponible.

8. Procédé selon l'une quelconque des revendications précédentes, comprenant une étape consistant à annoter la base de données de navigation.

9. Procédé selon l'une quelconque des revendications précédentes, le fait déclencheur d'une étape de comparaison et/ou de notification étant fonction du contexte de vol et/ou d'une révision du plan de vol courant de l'aéronef.

10. Procédé selon la revendication 9, comprenant une étape consistant à émettre une notification de rappel en cas d'utilisation d'un élément de la base de données de navigation déterminé comme indisponible.

11. Procédé selon l'une quelconque des revendications précédentes, comprenant une étape consistant à collecter une pluralité de messages aux navigants aériens.

12. Procédé selon l'une quelconque des revendications précédentes, le contenu d'un message étant enrichi par des données externes de type non-avionique.

13. Produit programme d'ordinateur, ledit programme d'ordinateur comprenant des instructions de code permettant d'effectuer les étapes du procédé selon l'une quelconque des revendications 1 à 12, lorsque ledit programme est exécuté sur un ordinateur.

14. Un système comprenant des moyens pour mettre en oeuvre les étapes du procédé selon l'une quelconque des revendications 1 à 12.

15. Système selon la revendication 14, comprenant un sac de vol électronique EFB et/ou un système de gestion de vol FMS.
